(19) Europäisches Patentamt
European Patent Office
Office européen des brevets

(11) Veröffentlichungsnummer: **0 019 749**
**A1**

(12) # EUROPÄISCHE PATENTANMELDUNG

(21) Anmeldenummer: **80102444.9**

(22) Anmeldetag: **06.05.80**

(51) Int. Cl.³: **D 06 L 3/12**, D 06 P 1/667

(30) Priorität: **09.05.79 DE 2918672**

(43) Veröffentlichungstag der Anmeldung: **10.12.80**
**Patentblatt 80/25**

(84) Benannte Vertragsstaaten: **BE DE FR GB IT NL**

(71) Anmelder: **HOECHST AKTIENGESELLSCHAFT, Zentrale Patentabteilung Postfach 80 03 20, D-6230 Frankfurt/Main 80 (DE)**

(72) Erfinder: **Martini, Thomas, Dr., Am Schellberg 42, D-6232 Bad Soden am Taunus (DE)**
Erfinder: **Dürsch, Walter, Dr., In der Braubach 4, D-6240 Königstein/Taunus (DE)**
Erfinder: **Polster, Johannes, Birsteiner Strasse 47, D-6000 Frankfurt am Main 61 (DE)**
Erfinder: **Weckler, Gerhard, Dr., Billtalstrasse 36, D-6231 Sulzbach (DE)**

(54) **Verfahren zum Aufhellen und Färben von Synthesefasern.**

(57) Verfahren zum optischen Aufhellen und Färben von Textilmaterial aus Synthesefasern nach dem Thermosolverfahren in Gegenwart eines Thermosolierhilfsmittels der allgemeinen Formel I

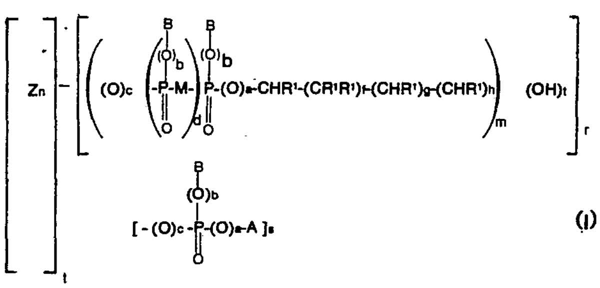

(I)

durchgeführt, wobei

r und s 0 bis 8, wobei gilt, dass nur entweder r oder s > 0 sein können, f, g, h 0 oder 1, f + g + h = 0 nur dann, wenn auch a = 0 ist,
m 1 bis 100,
a, b, c 0 oder 1,
d 0 oder 1,
t 0 oder 1, 0 nur dann, wenn gleichzeitig r = 1, s = 0 und m = 1 sind,
$R^1$ Alkyl- oder Alkenylgruppen mit 1 bis 4 Kohlenstoffatomen und bevorzugt Wasserstoff,
B gegebenenfalls durch bisfunktionelle Gruppen (Q) unterbrochene und durch monofunktionelle Reste L substituierte und/oder durch Halogenatome substituierte, aliphatische oder aromatische Kohlenwasserstoffreste mit 1 bis zu 22 Kohlenstoffatomen,
A dasselbe wie B,
M $C_1$-$C_{10}$-Alkylen oder Phenylen oder Xylylen,
L einwertige funktionelle Gruppen von der Art

$-OH$, $-OR^2$, $-\overset{O}{C}R^2$, $-O\overset{O}{C}R^2$, $-\overset{O}{C}OR^2$, $-NR^1R^1$, $-NR^1-CO-R^2$, $-CO-NR^1R^1$, $-OCONR^1R^1$, $-NR^1-CO-NR^1R^1$, wobei $R^2$ dasselbe wie $R^1$ ausser Wasserstoff sein kann,
Q eine bisfunktionelle, die Kohlenwasserstoffketten unterbrechende Gruppe von der Art -O-, -S-, $-SO_2-$, $-NR^1-$, -CO-O-, -O-CO-, $-O-CO-NR^1-$, $NR^1-CO-$, $-NR^1-CO-O-$, $-NR^1-CO-NR^1-$ und
$Z_n$ Wasserstoff oder einen n-wertigen Rest bedeutet.

EP 0 019 749 A1

HOECHST AKTIENGESELLSCHAFT HOE 79/F 108 Dr.OT/wö

Verfahren zum Aufhellen und Färben von Synthesefasern

Anwendbarkeit und Qualität eines optischen Aufhellers oder Farbstoffes werden nicht nur durch die Chemie des aufhellenden oder färbenden Stoffes geprägt sondern auch stark beeinflußt durch die beim Aufhell- oder Färbeprozeß verwendeten Hilfs- und Zusatzstoffe.

So ist z.B. bei Polyesterfärbungen durch Thermosolieren der Zusatz von Thermocarriern üblich, wobei es sich meist um Mischungen aus nichtionogenen Klotzhilfsmitteln wie z.B. Oxäthylate mit Zusätzen von Lösungsmitteln oder lösungsmittelähnlichen Substanzen wie Naphtholen, Naphthalinderivaten, Aminoverbindungen oder Phenolderivaten handelt. Die Zusätze bewirken, daß auch bei tieferen Temperaturen thermosoliert werden kann (Chwala-Anger, Handbuch der Textilhilfsmittel, Weinheim, New York, 1977 S. 611). Auch bei optischen Aufhellern ist es bekannt, daß die Zugabe bestimmter Hilfsstoffe die Weißeffekt-Eigenschaften, wie Brillanz und Weißgrad beeinflußen. Während aber über das Thermosolierverhalten von Farbstoffen eine ganze Anzahl von Arbeiten bekannt wurde, ist über das Thermosolierverfahren von Aufhellern nur wenig berichtet worden. So beschreibt die DE-OS 25 00 915 den Einsatz von Alkoxyalkylfettsäuren oder Abietinsäureestern sowie Phthalsäure oder Phosphorsäureester in Kombination mit einem Alkalisulfat-phosphat, Aluminiumtetraborat oder einem Ampholyten beim Thermofixierprozess von PES. Diesem Verfahren ist ein Ausziehverfahren vorgeschaltet und die Zugabe eines Ampholyten oder eine Alkalisalzes ist obligatorisch.

Es stellt sich daher die Aufgabe nach einer Verbesserung der Applikation von optischen Aufhellern oder Farbstoffen auf Synthesefasern nach dem Thermosolverfahren und es wurde gefunden, daß man solche Verbesserungen erreichen kann, wenn man die optischen Aufheller oder Farbstoffe in Gegen-

BAD ORIGINAL

wart von phosphororganischen Verbindungen als Thermosolierhilfsmittel appliziert.

Gegenstand der Erfindung ist somit ein Verfahrén zum optischen Aufhellen und Färben von Textilmaterial aus Synthesefasern nach dem Thermosolverfahren, das dadurch gekennzeichnet ist, daß man das Thermosolverfahren in Gegenwart eines Thermosolierhilfsmittels der allgemeinen Formel I

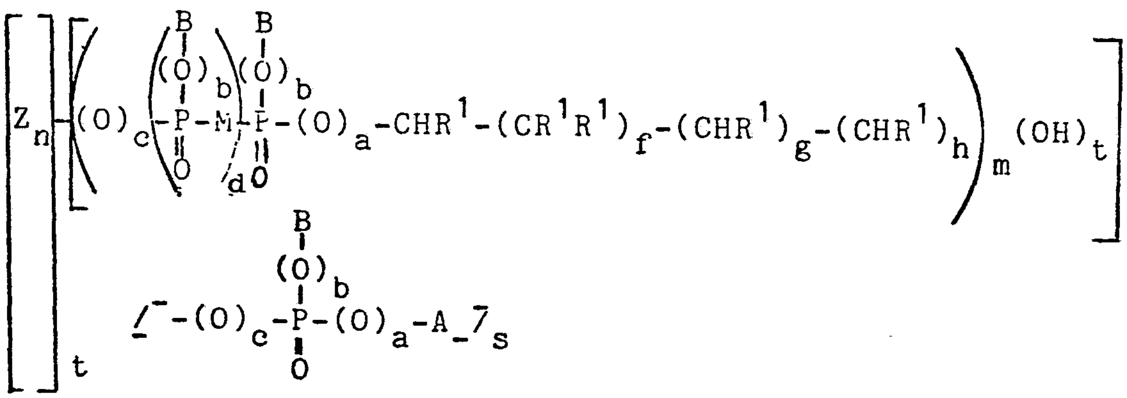

(I)

durchgeführt, wobei

r und s 0 bis 8, wobei gilt, daß nur entweder r oder s > 0 sein können, f, g, h 0 oder 1, f + g + h = 0 nur dann, wenn auch a = 0 ist,

m 1 bis 100, bevorzugt 1 - 10,

a, b, c 0 oder 1, bevorzugt a + b + c = 1 oder 2,

d 0 oder 1, bevorzugt 0,

t 0 oder 1, bevorzugt 1, 0 nur dann, wenn gleichzeitig r = 1, s = 0 und m = 1 sind,

$R^1$ gleiche oder verschiedene, verzweigte oder unverzweigte Alkyl- oder Alkenylgruppen mit 1 bis 4 Kohlenstoffatomen und bevorzugt Wasserstoff,

B gegebenenfalls durch eine oder mehrere bisfunktionelle Gruppen Q unterbrochene und durch monofunktionelle Reste L substituierte und/oder durch Fluor-, Chlor- oder Bromatome ein- oder mehrmals substituierte, gegebenenfalls verzweigte, spiroverzweigte, cyclische und gegebenenfalls ungesättigte aliphatische oder aromatische

0019749

Kohlenwasserstoffreste mit 1 bis zu 22 Kohlenstoffatomen, bevorzugt $C_1$-$C_8$-Alkyl oder Hydroxyäthyl und für b = 1 Hydroxymethyl,

A dasselbe wie B,

M $C_1$-$C_{10}$-Alkylen oder Phenylen oder Xylylen, bevorzugt $C_1$-$C_4$-Alkylen,

L einwertige funktionelle Gruppen von der Art

OH, $OR^2$, $\overset{O}{\overset{\|}{C}}R^2$, $O\overset{O}{\overset{\|}{C}}R^2$, $\overset{O}{\overset{\|}{C}}OR^2$, $NR^1R^1$, $NR^1$-CO-$R^2$, CO-$NR^1R^1$, $OCONR^1R^1$, $NR^1$-CO-$NR^1R^1$, wobei $R^2$ dasselbe wie $R^1$ außer Wasserstoff sein kann,

Q eine bisfunktionelle, die Kohlenwasserstoffketten unterbrechende Gruppe von der Art -O-, -S-, $-SO_2-$, $-NR^1-$, -CO-O-, -O-CO-, -O-CO-$NR^1$-, -$NR^1$-CO-, -$NR^1$-CO-O-, -$NR^1$-CO-$NR^1$- und

$Z_n$ Wasserstoff oder einen n-wertigen Rest, wobei n 1 bis 8 sein kann, aus der Gruppe geradkettige oder verzweigte Kohlenwasserstoffreste mit 1 bis 10, vorzugsweise 1 bis 12 C-Atomen, die gegebenenfalls durch bis zu acht -O-, allgemein bis zu (q/2-1) -O-, wenn q die Anzahl der C-Atome in $Z_n$ bedeutet, bzw. bis zu drei -S-, und/oder $NR^1$-Reste mit $R^1$ = ($C_1$-$C_4$)-Alkyl, insbesondere Methyl, unterbrochen und/oder durch die Reste L und/oder Fluor-, Chlor-, Bromatome, ein oder mehrmals substituiert sein können; Cyclohexylreste, die gegebenenfalls durch ein bis drei, vorzugsweise einen geradkettigen oder verzweigten und/oder ungesättigten und/oder F-, Cl-, Br-Atome, vorzugsweise bis zu 4, tragenden Alkylrest mit 1 bis 4 C-Atomen substituiert sein können; aromatische oder araliphatische Reste, die sich von Benzol, Alkylbenzolen mit bis zu 22 C-Atomen, von Naphthalin, Diphenyl, Diphenylmethan, Diphenyläthan oder 2,2-Diphenylpropan ableiten, die gegebenenfalls im Kern durch 1 oder 2 Methoxy- bzw. Äthoxygruppen substituiert sein können, und die im Kern und/oder den Seitenketten durch F-, Cl-, Br-Atome substituiert, vorzugsweise bis fünfmal substituiert sein können,

oder phosphorhaltige Reste der allgemeinen Formel

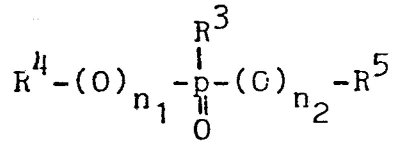

$Z_{n,1}$

in der

$n_1$, $n_2$ unabhängig voneinander 0 oder 1 und

$R_3$ Alkyl-, Hydroxyalkyl-, gegebenenfalls $(C_1-C_4)$-alkyliertes bzw. -dialkyliertes Aminoalkyl-, Halogen- (vorzugsweise Cl-)alkyl mit 1 bis 3 C-Atomen, Alkenyl mit 2 oder 3 C-Atomen oder Phenyl, das gegebenenfalls durch 1 oder 2 Halogenatome, vorzugsweise Cl, Br, substituiert sein kann, bedeuten,

$R^4$, $R^5$ wenn das zugehörige $n_2$ bzw. $n_1$ = 0 ist, die gleichen Bedeutungen wie $R^3$ haben mit der Einschränkung, daß für $n_1 = n_2 = 0$ mindestens einer der Reste $R^4$, $R^5$ ein $(C_1-C_3)$ Alkylen-Rest ist, wenn das zugehörige $n_1$ und/oder $n_2$ = 1 ist, einen geradkettigen oder verzweigten Alkylenrest mit 2- 5 C-Atomen oder den Rest

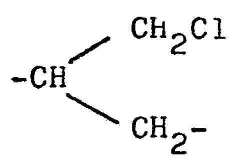

bedeuten,

oder Zn phosphorhaltige Reste der allgemeinen Formel

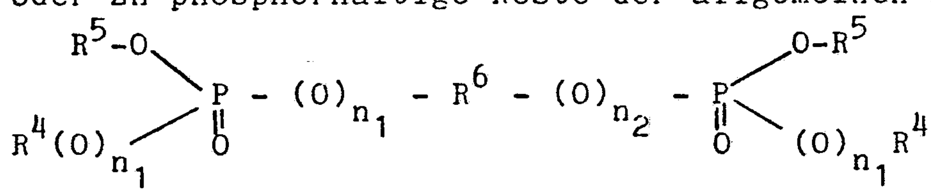

$Z_{n,2}$

in der $n_1$, $n_2$, $R^4$, $R^5$ Bedeutungen wie in $Z_{n,1}$ haben und $R^6$ einen geradkettigen oder verzweigten $(C_1-C_6)$-Alkylen-, Phenylen-, Äthylen-Rest oder einen Rest

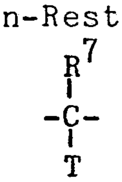

mit T = OH, $NH_2$ und $R^7 = (C_1-C_4)$-Alkyl oder

$Z_n$ bedeutet ein Alkalimetall, bevorzugt Natrium und Kalium oder $NR^4$, aber nur wenn c = 1 ist.

Aus der allgemeinen Formel I lassen sich unter Verwendung der Indizes a, b und c sehr leicht kennzeichnende Charakteristiken für die verschiedenen Klassen von geeigneten Verbindungen des fünfwertigen Phosphors ableiten. In der folgenden Übersicht sind die möglichen für das erfindungsgemäße Verfahren geeigneten Verbindungsklassen und ihre Charakteristiken zusammengestellt.

| Verbindungsklasse | Charakteristik mit Hilfe der Kennzeichen | | |
|---|---|---|---|
| | a | b | c |
| 1. Phosphinoxide | 0 | 0 | 0 |
| 2. (Mono-)Phosphinsäure-Derivate | 0 | 0 | 1 |
| 3. (Bis-)Phosphinsäure-Derivate | 1 | 0 | 0 |
| 4. (Mono-)Phosphinsäure-Derivate | 1 | 0 | 1 |
| 5. Di-Phosphonsäure-Derivate | 0 | 1 | 1 |
| 6. Phosphorsäure-Derivate | 1 | 1 | 1 |

Sind mehrere Phosphoratome im Molekül vorhanden, so können sie verschiedenen Verbindungsklassen zugehören und somit auch verschiedene Einzel-Charakteristiken aufweisen. Bei der Wiedergabe der Gesamt-Charakteristik für Verbindungen mit mehreren Phosphoratomen, die verschiedenen Verbindungsklassen angehören, können die Mittelwerte der jeweiligen Einzelgrößen a, b, c angegeben werden.

Die sich anschließende Aufzählung der geeigneten Verbindungsklassen kann keinesfalls vollständig sein.

Die formale Unterteilung erfolgt entsprechend der Tatsache, ob in der Formel I r oder s = 0 ist und entsprechend der Bindungsart des fünfwertigen Phosphors. Die Charakteristiken sind jeweils in Klammern angegeben.

Verbindungen Gruppe A: Verbindungen bei denen in Formel I r = 0 ist.

Wenn r=0 und s=1-8 sind entsprechen die einsetzbaren Verbindungen der allgemeinen Formel $I_s$

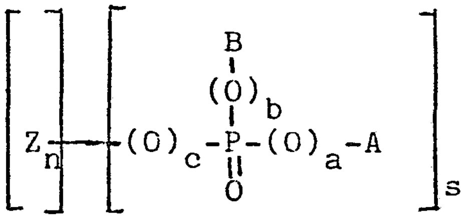

(Is)

wobei a, b, c, s, A, B und $Z_n$ die obengenannte Bedeutung besitzen. Je nach Art der Indizes a, b und c kommen in Betracht

A1: Phosphoroxide (Charakteristik a0, b0, c0):

A1a: Mono-Phosphinoxide der Formel $I_{s1a}$

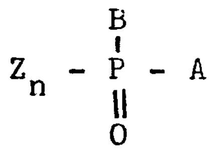

($I_{s,1a}$)

Es sind bevorzugt A, B=$CH_3$, $CH_2OH$, $C_2H_4OH$ und $Z_n$=$CH_3$, $CH_2OH$, $C_2H_4OH$, $C_3H_6OH$. Die Herstellung kann z.B. durch Oxidation der entsprechenden tertiären Phosphine erfolgen. (Houben-Weyl Bd. 12/1, S. 140).

A1b: Die Phosphinoxide der Formel $I_{s,1b}$

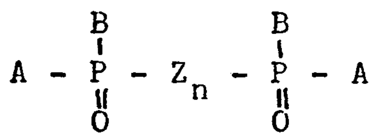

($I_{s,1}$b)

Bevorzugt sind A, B = $CH_3$ und $Z_n$ = $C_2H_4$- oder -$CH_2$- Die Herstellung kann z.B. durch Addition von Vinyldimethyl-phosphinoxid an Dimethyl-phosphinoxid erfolgen.

A2: s-Wertige Mono-phosphinsäure-ester (a0, b0, c1) der Formel $I_{s,2}$

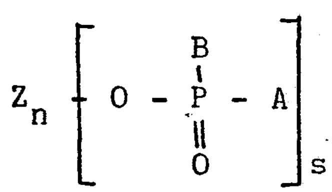

($I_{s,2}$)

Bevorzugt sind s=1-4 B=($C_1$-$C_4$)-Alkyl, A=($C_2$-$C_4$)-Alkyl, $C_2H_4OH$ und $C_3H_6OH$ für
für s=1: $Z_n$ = ($C_1$-$C_4$)-Alkyl und $C_2H_4OH$, $Z_n$ = $C_2H_4$, n-$C_4H_8$, n-$C_6H_{12}$, $CH_2$-C($CH_3$)$_2$-$CH_2$,
für s=3: $Z_n$ = $CH_2$-CH-$CH_2$ und

für s=4: $Z_n$ = $C-(CH_2)_4$

Die Herstellung kann z.B. - nach bekannten Methoden - aus den Mono-Phosphin-Säurechloriden und Alkoholen bei Gegenwart von Säureakzeptoren (vgl.Houben-Weyl, Bd. 12/1, S. 248) oder durch Addition von Vinyl- bzw. Allylacetat an Alkanphosphonigsäure-mono-ester und anschließende Abspaltung des Essigsäurerestes durch Verseifung erfolgen. (Liebigs Ann. Chem. 1974, 742-743)

A3: Bis-(alkyl-phosphinsäure)-ester (a1, b0, c0) der Formel $I_{s,3}$

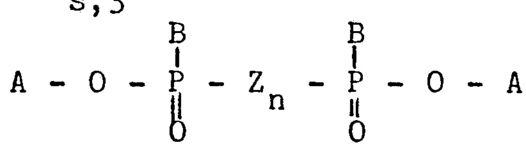

($I_{s,3}$)

Bevorzugt sind; B= $CH_3$, A= $(C_1-C_4)$Alkyl, $Z_n$= $CH_2$, $C_2H_4$, $C_4H_8$, n-$C_6H_{12}$, $CH_2$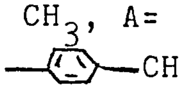$CH_2$. Die Herstellung kann durch Addition von Alkanphosphonigsäure-mono-ester an Acetylen (DOS 23 025 231) oder an $C_4$-$C_{10}$-Alkadiene oder durch Michaelis-Arbusov-Reaktion von $C_5$-$C_{10}$-Dihalogen-alkanen mit Alkanphosphinigsäure-dialkyl-estern erfolgen. (vgl. Houben-Weyl Bd. 12/1, S. 252)

A4: s-Wertige Mono-Phosphonsäureester (a1, b0, c1) der Formel $I_{s,4}$

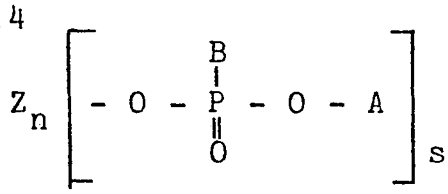

($I_{s,4}$)

Bevorzugt sind für s=1: A, B und $Z_n$= $(C_1-C_4)$Alkyl,
für s=2: $Z_n$= $C_2H_4$
für s=3: $Z_n$= $CH_2$-CH-$CH_2$,
für s=4: $C(-CH_2-)_4$.

Die Herstellung kann z.B. aus den Alkoholen durch Umsetzung mit den Phosphonsäurechloriden oder aus Dialkylphosphiten durch Addition von Alken-Derivaten

erfolgen (vgl. Houben-Weyl, Bd. 12/1, S. 423 ff und S. 463 ff)

A5: Di-Phosphonsäure-ester (a1, b1, c0) der Formel $I_{s,5}$)

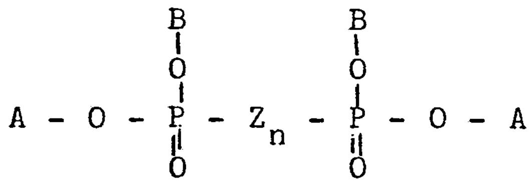

($I_{s,5}$)

Bevorzugt sind: A und B= $(C_1-C_4)$Alkyl
$Z_n$= $n-C_6H_{12}$, $n-C_4H_8$, $C_2H_4$, $CH_2$, $C_6H_4$
Die Verbindungen sind analog den Bis-alkylphosphinsäureestern (vg. A3), nur ausgehend von den entsprechenden Phosphiten, zugänglich.

A6: s-Wertige Phosphorsäure-ester (a1, b1, c1) der Formel $I_{s,6}$

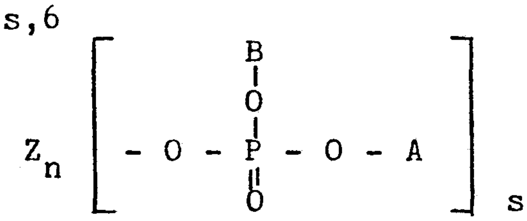

($I_{s,6}$)

Bevorzugt sind für s=1: A, B und $Z_n$= $(C_1-C_4)$Alkyl,
für s=2: $Z_n$= $C_2H_4$.
Die Phosphorsäureester sind ausgehend von $POCl_3$ oder von $P_2O_5$-Alkoholen und Alkylenoxid auf mannigfaltige Weise zugänglich. (vgl.z.B. Houben-Weyl, Bd. 12/2, S. 310-320).

A7: Phosphorigsäureester (a1, b1, c0) der Formel $I_{s,7}$

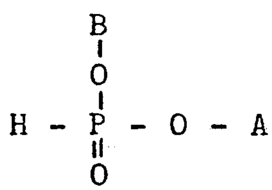

($I_{s,7}$)

Bevorzugt sind: A und B= $C_2H_4-O-C_2H_4-OH$.
Diese Phosphorigsäureester werden erhalten durch Oxäthylierung von phosphoriger Säure.

Verbindungen der Gruppe B: Verbindungen, bei denen in Formel I $s = 0$ ist:

Bevorzugt sind, wenn $s=0$ und $r=1$ bis n sind, alle monomeren ($m=1$) und oligomeren ($m > 1$) Verbindungen von der allgemeinen Formel $I_r$

$I_r$

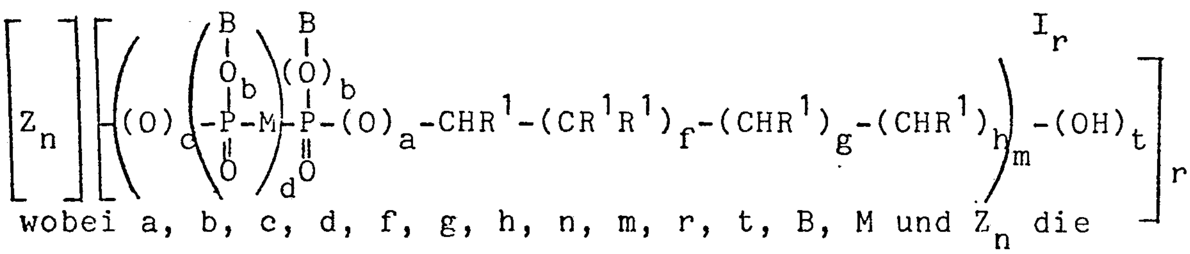

wobei a, b, c, d, f, g, h, n, m, r, t, B, M und $Z_n$ die oben angegebene Bedeutung aufweisen.

Besonders bevorzugt sind davon alle Substanzen der Formel I, bei denen speziell sind:

t = 0 oder 1
r = 1 bis 3
a,b,c = 0 oder 1
f,g,h = 0 oder 1
$R^1$ = Wasserstoff und $CH_3$
B = $C_1$-$C_4$-Alkyl, vor allem $CH_3$
$Z_n$ = $C_1$-$C_4$-Alkyl, $C_2H_4OH$, $-C_2H_4-$, $-C_4H_8-$, $-C_6H_{12}-$, $-C_8H_{16}-$, oder $C-(CH_2)_4-$
m, wenn t=1 ist, gleich 1 bis 10, wenn t=0 ist, gleich 1.

Von diesen besonderen Verbindungen der Formel $I_r$ seien beispielsweise näher erläutert:

B1: P-haltige Fünf- und Sechsring-Verbindungen (Phospholan- bzw. Phosphorinan-Derivate)

B1a: Cyclische Phosphinsäure-ester ("Phosphino-phostone") (t0, d0, m1, a0, b0, c1, f1, g1) der allgemeinen Formel $I_{r,1a}$

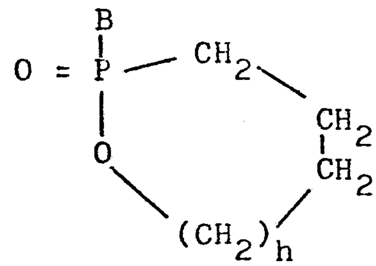

($I_{r,1a}$)

wobei h 0 oder 1, bevorzugt 0 und B ($C_1$-$C_4$)-Alkyl, vor allem $CH_3$ bedeuten.

Die Verbindungen $I_{r,1a}$ können z.B. gemäß Liebigs Ann. Chem. 1974, S. 743 oder gemäß Z.Chem. 15 (1975) Heft 2, S. 52-53 erhalten werden.

B1b: Cyclische Phosphonsäureglykol-ester (t0, d0, m1, a1, b0, c1, f1, h0) der allgemeinen Formel $I_{r,1b}$

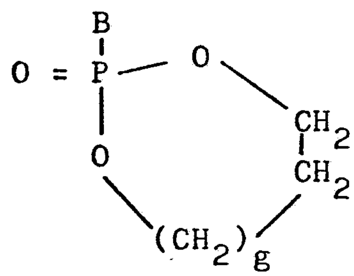

($I_{r,1b}$)

wobei g 0 oder 1, bevorzugt 0, und B ($C_1$-$C_4$)-Alkyl, vor allem ($C_1$-$C_3$)-Alkyl bedeuten.

Die Verbindungen $I_{r,1b}$ sind z.B. gemäß Houben-Weyl Bd. 12/1, S. 424 zugänglich.

B1c: Cyclische "Phosphino-phostone" (t0, d0, m1, a0, b1, c1, f1, g1) der allgemeinen Formel $I_{r,1c}$

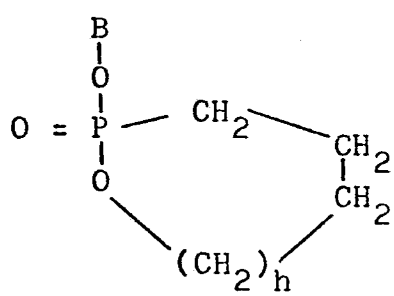

($I_{r,1c}$)

wobei h 0 oder 1, bevorzugt 0, und

B $(C_1-C_8)$-Alkyl, vor allem $(C_1-C_4)$-Alkyl bedeuten. Verbindungen von der Art $I_{r,1c}$ sind z.B. gemäß Z.Chem. 15 Jhg. (1975) Heft 2, S. 52 und 53 zugänglich.

B1d: Cyclische Phosphorsäureester (t0, d0, m1, a1, b1, c1, f1, h0) der allgemeinen Formel $I_{r,1d}$

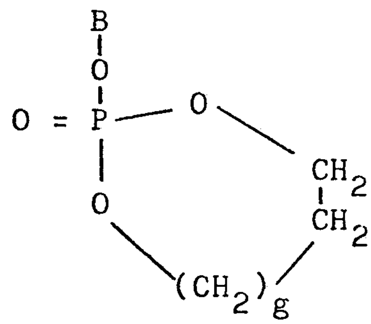

$(I_{r,1d})$

wobei g 0 oder 1, bevorzugt 0,

B $C_1-C_8$-Alkyl, vor allem $(C_1-C_4)$-Alkyl bedeuten. Die Herstellung der Verbindungen $I_{r,1d}$ ist z.B. analog Houben-Weyl Bd., 1212 S. 320-321 möglich.

B2: Monomere und oligomere Phosphinsäure-ester (t1, d0, a0, b0, c1, f1, g1, h0) der allgemeinen Formel $I_{r,2}$

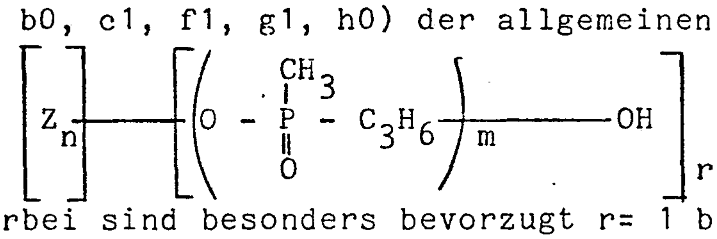

$(I_{r,2})$

hierbei sind besonders bevorzugt r= 1 bis 3, m= 1 bis 10 ferner

für r=1: $Z_n = C_1-C_4$-Alkyl und vor allem $C_2H_4OH$

für r=2: $Z_n = C_2H_4$,

für r=3: $Z_n = CH_2-CH-CH_2$

Die Verbindungen $I_{r,2}$ können hergestellt werden nach dem Verfahren der deutschen Patentanmeldung P 28 419 412 d.h. durch Addition von r.m Molen des Phostons

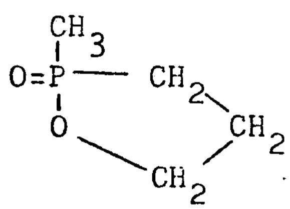

an r-wertige Alkohole bei Gegenwart von Alkoholaten.

B3: Monomere und oligomere Phosphonsäure-ester (t1, d0, a1, b0, c1, f1, g0, h0) der allgemeinen Formel $I_{r,3}$

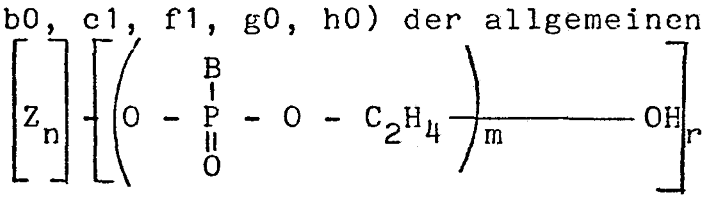

, $(I_{r,3})$

hierbei sind besonders bevorzugt:

r = 1 bis 3, m = 1 bis 10

B $C_1$-$C_4$-Alkyl (vor allem $C_1$-$C_2$-Alkyl) und $C_2H_4OH$,

$Z_n$ $C_1$-$C_4$-Alkyl und vor allem $C_2H_4OH$, ferner $CH_2$-$CH_2$ (für r=2) und $CH_2$-CH-$CH_2$ (für r=3).

Die Verbindungen $I_{r,3}$ können hergestellt werden nach dem Verfahren der DE-OS 27 26 478 durch Addition von r.m Molen der cyclischen Glykol-phosphonsäureester der Type 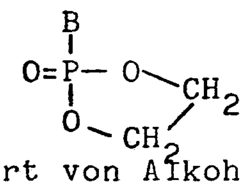 an r-wertige Alkohole bei Gegenwart von Alkoholaten.

B4: Monomere und oligomere Phosphonsäure-ester (t1, d0, a0, b1, c1, f1, g1, h0) der allgemeinen Formel $I_{r,4}$

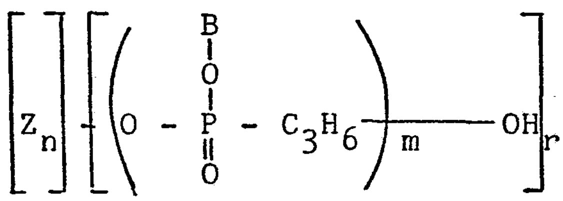

$(I_{r,4})$

Hierbei sind besonders bevorzugt:

R = 1 bis 3,

m = 1 bis 10,

B = $C_1$-$C_4$-Alkyl (vor allem $CH_3$) und $C_2H_4OH$

$Z_n$= $C_1$-$C_4$-Alkyl und vor allem $C_2H_4OH$, ferner $C_2H_4$ (für r=2) und $CH_2$-CH-$CH_2$ (für r=3).

Die Verbindungen $I_{r,4}$ können erhalten werden durch Addition von r.m Molen der Verbindungen 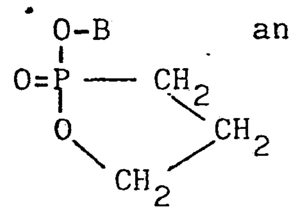 an r-wertige Alkohole in Gegenwart von Alkoholaten.

B5: Monomere und oligomere Phosphorsäure-ester (t1, d0, a1, b1, c1, f1, g0, h0) der allgemeinen Formel $I_{r,5}$

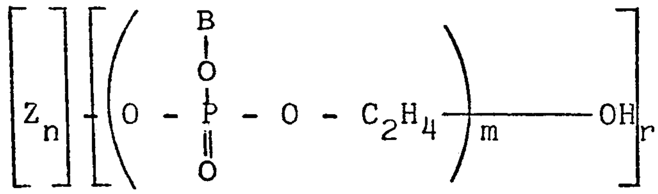

$(I_{r,5})$

Hierbei sind besonders bevorzugt:

r = 1 bis 3,

m = 1 bis 10,

B = $C_1$-$C_4$-Alkyl (vor allem $CH_3$) und $C_2H_4OH$

$Z_n$= $C_1$-$C_4$-Alkyl und vor allem $C_2H_4OH$, ferner $C_2H_4$ (für r=2) und $CH_2$-CH-$CH_2$ (für r=3).

Die Verbindungen $I_{r,5}$ sind analog dem Verfahren der DE-OS 27 26 478 erhältlich.

B6: Monomere und oligomere Bis-phosphinsäure-ester (t1, d1, a1, b0, c1, f1, g0, h0) der allgemeinen Formel $I_{r,6}$

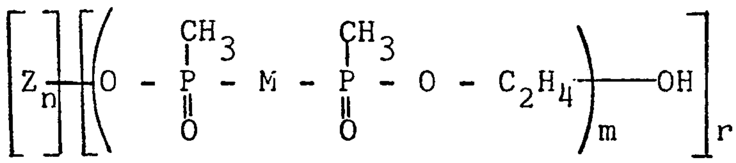

$(I_{r,5})$

Hierbei sind besonders bevorzugt

r = 1 bis 3

M = $C_1$-$C_6$-Alkylen

m = 1 bis 10

$Z_n$= $C_1$-$C_4$-Alkyl und vor allem $C_2H_4OH$, ferner $CH_2$-$CH_2$ (für r=2) und $CH_2$-CH-$CH_2$ (für r=3).

Die Substanzen $I_{r,6}$ sind gemäß der DE-OS 27 26 478 zugänglich.

B7: Monomere und oligomere Bis-phosphonsäure-ester (t1, d1, a1, b1, c1, f1, g0, h0) der allgemeinen Formel $I_{r,7}$

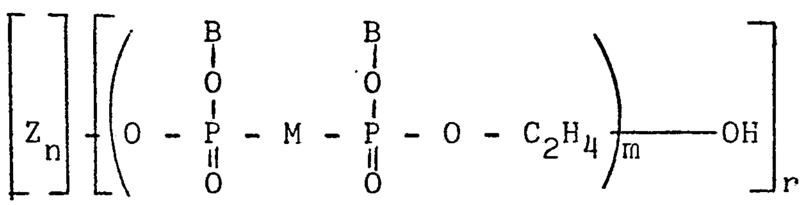

$(I_{r,7})$

Hierbei sind besonders bevorzugt:

$r$ = 1 bis 3,

$M = C_1-C_6$-Alkylen,

$m$ = 1 bis 10,

$B = (C_1-C_4)$-Alkyl, vor allem $CH_3$,

$Z_n = C_1-C_4$-Alkyl und vor allem $C_2H_4OH$, ferner $C_2H_4$ (für r=2) und $CH_2-CH-CH_2$ (für r=3).

Die Substanzen $I_{r,7}$ sind gemäß DE-OS 27 26 478.4 zugänglich.

Verbindungs-Gruppe C:

Bevorzugt sind ferner alle Verbindungen der Formel I mit Carbamatgruppen ($OCO-NH_2$) im Molekül.

C1: Bevorzugt sind daher alle Verbindungen der Formel $I_s$, bei denen der Rest A eine Carbamatgruppe von der Art $C_1-C_3$-Alkylen-$O-CO-NH_2$ darstellt.

Besonders bevorzugt sind z.B.

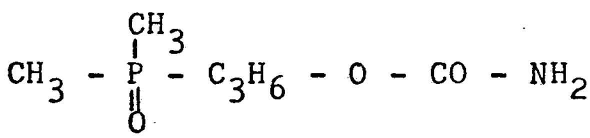

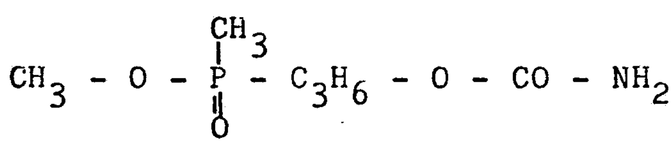

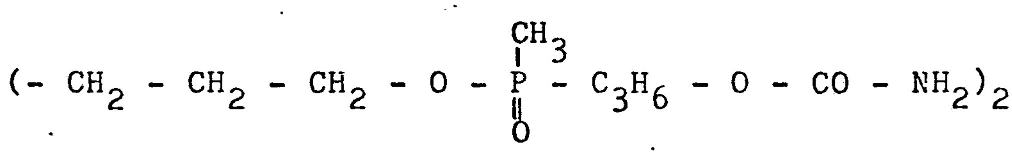

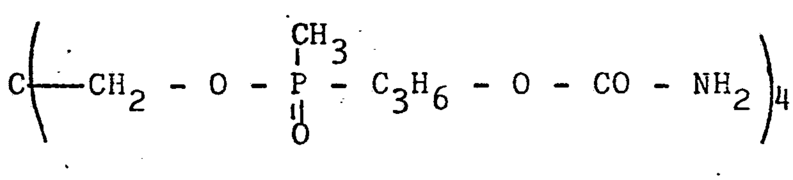

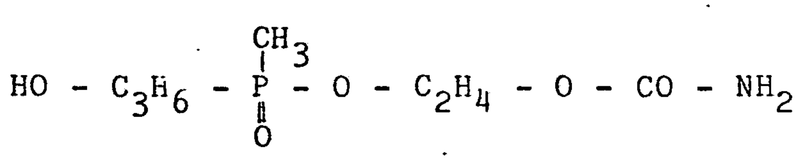

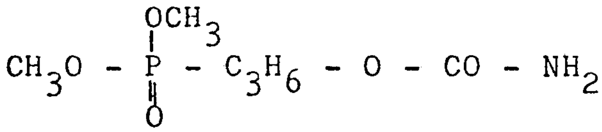

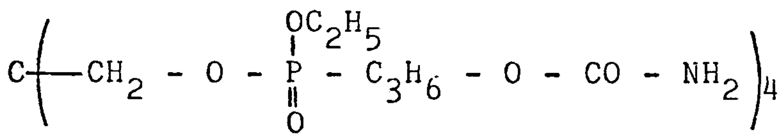

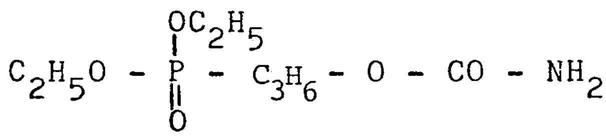

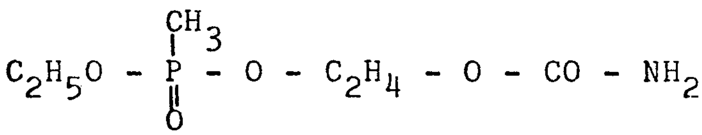

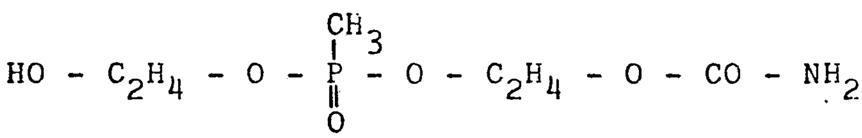

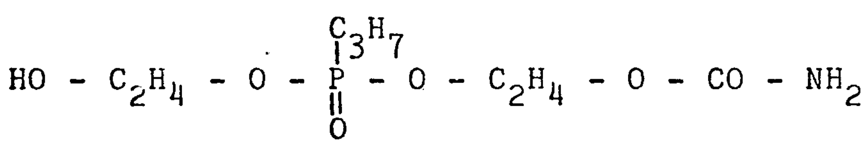

Die Verbindungen der Gruppe C1 sind durch radikalische Addition von Allylcarbamat an 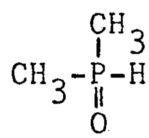 oder an Verbindungen der Type 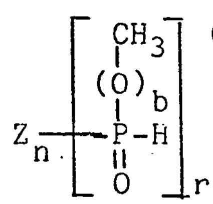 zugänglich, wobei b 0 oder 1, r 1 bis 4 und $Z_n$ vor allem $CH_3$, $C_2H_4$, $CH_2$-CH-$CH_2$ oder C(-$CH_2$-$)_4$ bedeuten.

C2: Bevorzugt sind ferner alle Verbindungen der Formel $I_r$, bei denen der Rest $Z_n$ eine $C_1$-$C_3$-Alkylen-O-CO-$NH_2$-Gruppe darstellt und gleichzeitig m 1, bevorzugt 2 bis 10 ist.

Besonders bevorzugt sind z.B.

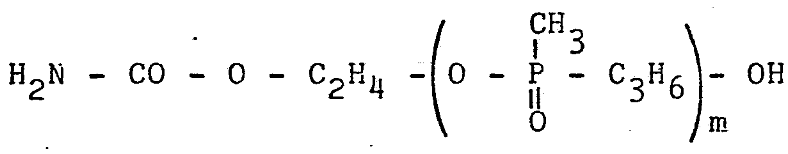

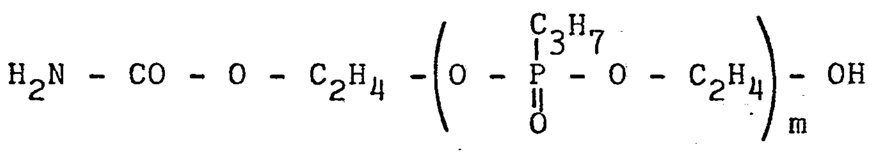

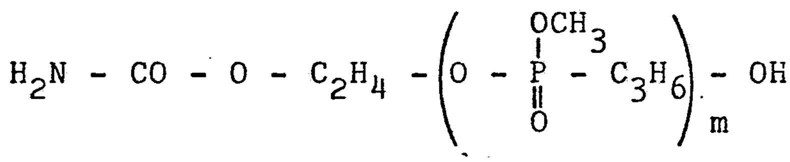

Die Verbindungen der Gruppe C2 sind z.B. durch (Oligo-)Addition von m Molen der Verbindungen

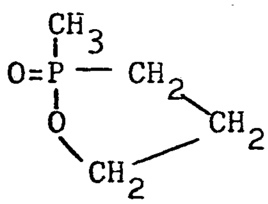, 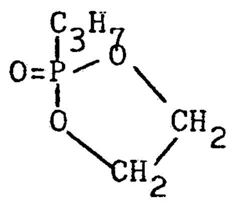 und 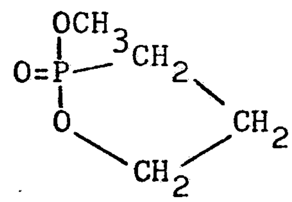 an

2-Hydroxi-ethyl-carbamat bei Gegenwart von Alkoholaten erhältlich.

Das Thermosolverfahren unter Verwendung der oben beschriebenen Hilfsmittel wird unter den bei diesem Verfahren üblichen Bedingungen durchgeführt, indem man das Textilmaterial mit einer Flotte imprägniert, die den optischen Aufheller oder Farbstoff in Form einer handelsüblichen Einstellung und das Hilfsmittel enthält. Anschließend wird abgequetscht auf einen Restfeuchtegehalt von ca. 50 - 120 Gew.-%, eventuell getrocknet und die Ware kurzzeitig einer Trockenhitzebehandlung ausgesetzt. Abweichend von diesem üblichen Verfahrensschema kann man auch so vorgehen, wie in der DE-OS 25 00 915 beschrieben ist, indem man nämlich zunächst den Aufheller oder dem Farbstoff und das Hilfsmittel aus langer Flotte nach dem Ausziehverfahren auf das Textilmaterial aufziehen läßt, abquetscht, trocknet und anschließend thermosoliert. Die positive Wirkung des

phosphororganischen Hilfsmittels ist in beiden Fällen gleich.

Die Zugabe des beschriebenen Thermosolierhilfsmittels kann auf verschiedene Weisen erfolgen. So kann man das Hilfsmittel beispielsweise direkt in die wäßrige Imprägnierflotte geben. Eine andere Möglichkeit besteht darin , daß man das Hilfsmittel zuvor in die handelsübliche Einstellung des Aufhellers bzw. Farbstoffs einarbeitet und in dieser Form in die Imprägnierflotte gibt. Derartige handelsübliche Einstellungen sind üblicherweise wäßrige Dispersionen, die noch ein Dispergierhilfsmittel wie z.B. Polyvinylalkohol enthalten. Diese Dispersionen werden durch Vermahlen hergestellt und man kann nun das Thermosolierhilfsmittel bereits während dieses Mahlvorganges zugeben oder auch im Anschluß daran. In allen Fällen kann man auch Mischungen der beschriebenen Thermosolierhilfsmittel verwenden, so daß chemisch reine Verbindungen hierbei nicht erforderlich sind, ein Vorteil, der die Herstellung dieser Verbindungen sehr erleichtert. So können z.B. Mischungen aus Phosphinoxiden, Phosphinsäure-, Phosphonsäure- und Phosphorsäurederivaten verwendet werden.

Die Menge an Hilfsmittel der Formel I beträgt 30 bis 500, vorzugsweise 100 - 200 Gew.-% bezogen auf die Menge an erforderlichem reinem Aufheller oder Farbstoff. Die Wirksamkeit dieser phosphorhaltigen Hilfsmittel ist in weiten Grenzen unabhängig vom pH-Wert, so daß man sich nach den in der Praxis üblichen pH-Werten für das Thermosolverfahren richtet. Abweichungen des pH-Wertes infolge der Zugabe der Hilfsmittel können mit Säuren oder Basen wieder ausgeglichen werden.

Das erfindungsgemäße Verfahren eignet sich für alle synthetischen Fasern entweder allein oder in Mischung mit anderen Fasern, die üblicherweise nach dem Thermosolverfahren aufgehellt werden wie etwa Polyester-, 2 1/2-Acetat-, Triacetat-, Polyacrylnitril- oder Polyamidfasern. Dieses

0019749

Textilmaterial kann in den verschiedensten Formen vorliegen, beispielsweise als Gewebe, Gewirke oder als gestrickte Ware aus Filament- oder Stapelfasern.

Als optische Aufheller kommen für das erfindungsgemäße Verfahren alle diejenigen Verbindungen in Frage, die sich zur Applikation auf das geschilderte Textilmaterial nach dem Thermosolverfahren eignen. Hierzu seien im folgenden einige typische Verbindungsklassen von optischen Aufhellern für die einzelnen Faserarten genannt, bei denen die vorteilhaften Effekte der beschriebenen Hilfsmittel zum Ausdruck kommen:

<u>Polyester</u>

Pyrentriazolinderivate, die in 3,5-Stellung des Triazolins substituiert sind,
Ethylen-bis-benzoxazole,
Styrilstilbene,
Naphthalin-bis-benzoxazole,
N-Methylnaphthalimide,
Triazolcumarine,
3-Phenyl-7-imidazol-cumarine,
4-Naphthotriazol-stilbene,
4-Benzoxazol-4'-phenylstilbene,
Thiophen-bis-benzoxazole.

<u>2 1/2-Acetat und Triacetat</u>

1,3-Diphenylpyrazoline substituiert durch eine Methylsulfongruppe.

<u>Polyacrylnitril</u>

Quarternäre Triazolcumarine.

<u>Polyamid</u>

Halogensubstituierte 1,3-Diphenylpyrazoline mit einer Ethylen-sulfonat-sulfongruppe.

Als Farbstoffe kommen alle für das Anfärben von Synthesefasern üblicherweise verwendeten Verbindungen in Frage, so insbesondere alle bekannten Dispersions- und Küpenfarbstoffe in handelsüblicher Einstellung.

Der Zusatz der beschriebenen Thermosolierhilfsmittel der Formel I bewirkt beim optischen Aufhellen eine Erhöhung des Weißgrades bzw. eine Verringerung der benötigten Menge an Aufheller zur Erreichung des gleichen Weißgrades wie ohne Verwendung dieses Hilfsmittels. Beim Färben von Synthesefasern zeigen diese Hilfsmitteil eine farbvertiefende Wirkung und verhindern die Bildung eines Grauschleiers. Außerdem wurde gefunden, daß sich bei Mitverwendung dieser Hilfsmittel die Thermosoliertemperatur von üblicherweise 190 - 200°C auf nunmehr ca. 180°C senken läßt. Die Thermosolierzeit beträgt, wie bei Thermosolverfahren üblich, ca. 20 bis 40 Sekunden.

Das Verfahren wird durch folgende Beispiele erläutert.

Beispiel 1

Die in diesem Beispiel eingesetzten optischen Aufheller für PES haben folgende chemische Konstruktion.

I

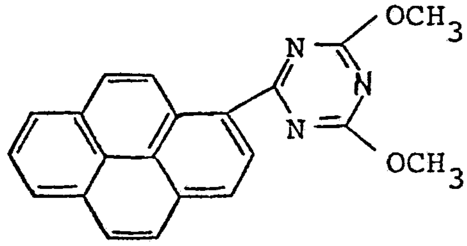

II

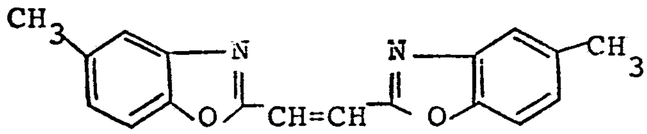

III

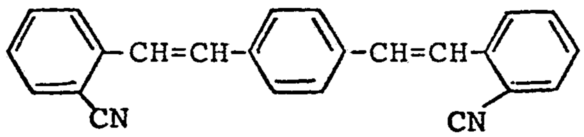

IV

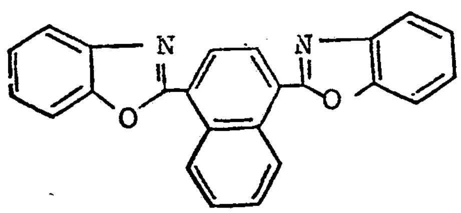

V

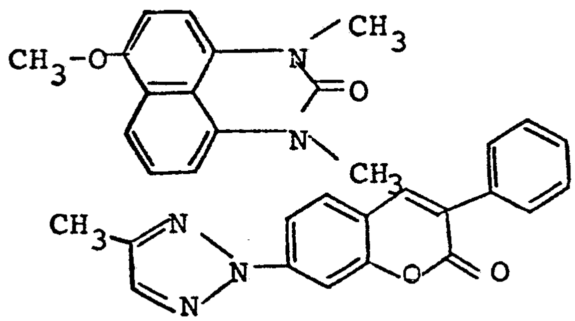

VI

VII

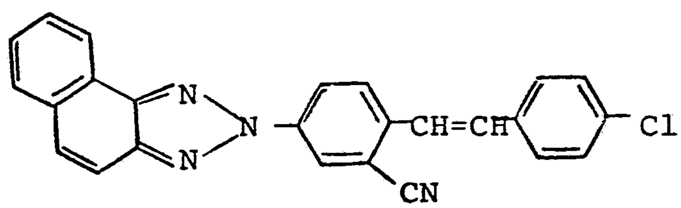

VIII

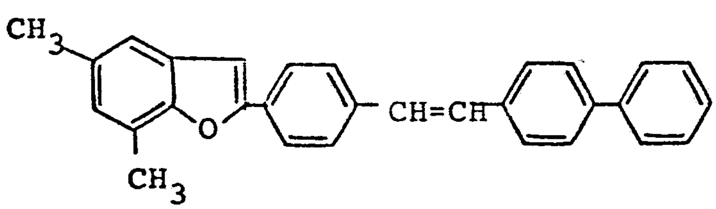

IX

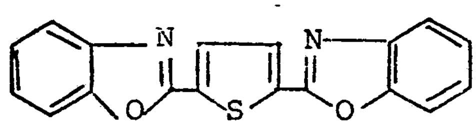

Ein Gewebe aus Polyester-Stapelfasern wurde mit einer wäßrigen Aufhellerdispersion imprägniert, die jeweils 1 g/l Wirksubstanz der Aufheller I - IX enthält und die durch Verdünnen handelsüblicher Aufhellerdispersionen gewonnen wurde. Die Imprägnierflotte enthält außerdem noch jeweils 10 g/l einen des weiter unten beschriebenen oligomeren Phosphonsäureesters. Anschließend wurde das Gewebe zwischen Walzen auf einen Feuchtigkeitsgehalt von 80 - 85 Gew.-%, bezogen auf das Warengewicht abgequetscht, 20 sec. bei 120°C getrocknet und dann bei 190°C 30 sec. auf dem Spannrahmen thermosoliert.

Das so behandelte Textilmaterial zeigt gegenüber dem nur mit dem Aufheller behandelten Material folgende Weißgradverbesserungen, die in Form der Weißgradunterschiede , gemessen nach Berger (WB) und Stensby (WS), wiedergegeben werden:

| Optischer Aufheller | WB | WS |
|---|---|---|
| I | + 4 | + 2 |
| II | + 3 | + 3 |
| III | + 5 | + 4 |
| IV | + 2 | + 2 |
| V | + 2 | + 2 |
| VI | + 2 | + 2 |
| VII | + 2 | + 2 |
| VIII | + 2 | 0 |
| IX | + 2 | + 2 |

Der in Beispiel 1 verwendete Phosphonsäure-ester wird wie folgt hergestellt:

Zu 440 g (4 Mol) Dimethylphosphit von der Säurezahl 4,2 wird unter Stickstoff bei 130-140°C innerhalb von 3 Stunden die Mischung aus
243,6 g (4,2 Mol) Allylalkohol und
12 g t-Butyl-peroxi-benzoat als Radikalspender zugetropft. Bereits nach kurzer Zeit destilliert bei

Normaldruck über eine 30 cm lange Vigrenx-Kolonne vorwiegend Methanol und überschüssiger Allylakohol ab. Nach Ende der Zugabe werden zur Vervollständigung der Reaktion innerhalb von 10 Min. nochmals 4 g des Radikalspenders zugesetzt und noch 30 Minuten nachgerührt. Insgesamt werden 128 g bei Normaldruck abdestilliert. Dann wird bei 80°C ein Vakuum von 30 mbar angelegt. Dabei destillieren nochmals 15 g in eine mit Kohlendioxid/Isopropanol gekühlte Kältefalle. Es werden

547 g Rückstand erhalten. Seine Säure-Zahl (in mg KOH pro Gramm) liegt bei 68, $n_D^{20}$= 1,4738.

Bei 90 bis 100°C werden anschließend

28 g (0,64 Mol) Äthylenoxid eingeleitet. Dabei fällt die Säurezahl des erhaltenen gelblichen Öls bis auf 2,0 ab.

Die Hydroxyl-Zahl (in mg KOH pro Gramm) liegt bei 69, der Phosphor-Gehalt bei 21,3 %, der Brechungsindex $n_D^{20}$= 1,4764.

## Beispiel 2

Polyester-Stapelfasergewebe wird wie in Bsp. 1 mit einer wäßrigen Dispersion des Aufhellers I in Gegenwart von 10 g/l der in Bsp. 1 verwendeten phosphororganischen Verbindung bei 160° 30 Sek. thermosoliert.

Bei dem so behandelten Gewebe wurde ein Weißgrad von 158 (Berger) bzw. 154 (Stensby) gemessen, während eine Probe des gleichen Materials, die lediglich mit der gleichen Menge des Aufhellers I, behandelt wurde, Weißgrade von nur 151 (Berger) bzw. 148 (Stensby) zeigt.

## Beispiel 3

Ein Gewebe aus Polyester-Stapelfasern wurde unter den Bedingungen des Beispieles 1 mit dem Aufheller I behandelt, wobei nur 1 g/l der in Bsp. 1 beschrieben phosphororganischen Verbindung der Aufhellerflotte zugegeben wurde.

Das so behandelte Gewebe zeigt eine erhebliche Weißgradverbesserung gegenüber der Vergleichsprobe ohne Hilfsmittel.

| | Weißgrad Berger | Weißgrad Stensby |
|---|---|---|
| Testgewebe | 163 | 161 |
| Vergleich | 159 | 159 |

Beispiel 4

Eine handelsübliche Dispersion des Aufhellers IV aus Beispiel 1 wird mit weichem Wasser so verdünnt, daß die Flotte 1 g/l Wirksubstanz und zusätzlich 5 g/l der in Beispiel 1 beschriebenen Verbindung enthält. In dieser Flotte wird in einem geschlossenen Gefäß bei einem Flottenverhältnis 1:15 ein Polyester-Stapelfasergewebe bei 98°C über 45 Min. gehalten. Anschließend wird getrocknet und 30 sek. bei 190°C thermosoliert. Die dabei erzielten Weißeffekte übertreffen diejenigen einer Vergleichsprobe ohne Zugabe der in Beispiel 1 beschriebenen Verbindung wie folgt:

| | Weißgrad Berger | Weißgrad Stensby |
|---|---|---|
| Testprobe | 157 | 153 |
| Vergleichsprobe | 154 | 152 |

Der gleiche Versuch wird mit dem Aufheller der Formel

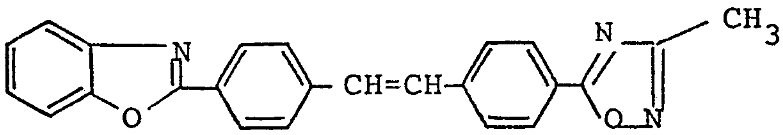

X

durchgeführt.

| | Weißgrad Berger | Weißgrad Stensby |
|---|---|---|
| Testprobe | 156 | 156 |
| Vergleich | 148 | 151 |

Beispiel 5

Zu einer wäßrigen Dispersion eines Aufhellergemisches mit dem Wirksubstanzverhältnis der Verbindung I:X von 1:1 wird, auf die Gesamtmenge an Aufhellerwirksubstanz bezogen, die doppelte Menge der in Beispiel 1 beschriebenen phosphor-organischen Substanz hinzugegeben. Diese modifizierte Aufhellerdispersion wird dann so mit Wasser verdünnt, daß die Aufhellerkonzentration 0,3 g/l und der Gehalt an Hilfsmittel 0,6 g/l beträgt. Wie bei Beispiel 1 wird nach dem Klotz-Thermosolverfahren aufgehellt und die Weißeffekte bestimmt. Ein ohne Hilfsmittel aufgehelltes Vergleichsgewebe zeigt eine deutlich geringere Aufhellung wie das Testgewebe.

| | Weißgrad Berger | Weißgrad Stensby |
|---|---|---|
| Testgewebe | 149 | 152 |
| Vergleich | 146 | 149 |

Beispiel 6

100 mg des Aufhellers I werden in 5 ml DMF gelöst und mit 5 ml eines 85 proz. Nonylphenols, oxethyliert mit 20-25 Ethylenoxideinheiten, versetzt. Die Mischung wird mit 1 g der in Beispiel 1 beschriebenen phosphororganischen Verbindung versetzt und mit weichem Wasser auf 100 ml verdünnt. Entsprechend Beispiel 1 wird ein Polyesterstapelfasergewebe mit dieser Flotte imprägniert, abgequetscht und bei 190$^{0}$ 30 sek. thermosoliert. Vergleichend dazu wird ein Versuch ohne Zusatz des Hilfsmittels durchgeführt. Die Weißgrade der Test- und der Vergleichsproben unterscheiden sich wie folgt:

| | Weißgrad Berger | Weißgrad Stensby |
|---|---|---|
| Testprobe | 156 | 157 |
| Vergleich | 152 | 152 |

0019749

Beispiel 7

Eine handelsübliche Einstellung des Aufhellers XI

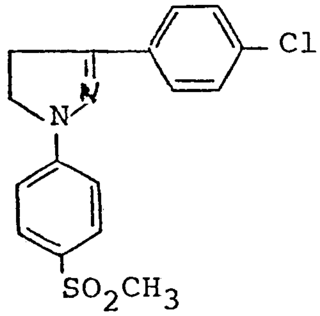

wird so verdünnt, daß die Dispersion 1 g/l Wirksubstanz enthält. Zusätzlich werden 10 g/l der in Beispiel 1 beschriebenen phosphororganischen Verbindung hinzugegeben und mit der Flotte wird ein Zellulosetriacetatgewebe, wie bei Beispiel 1 angegeben, imprägniert und bei 190° 30 sek. thermosoliert. Gegenüber einer Vergleichsprobe ohne Zusatz erhält man eine Zunahme des Weißgrades von 3 Berger-Einheiten und 2 Stensby-Einheiten.

Beispiel 8

Eine handelsübliche Einstellung des Aufhellers XII

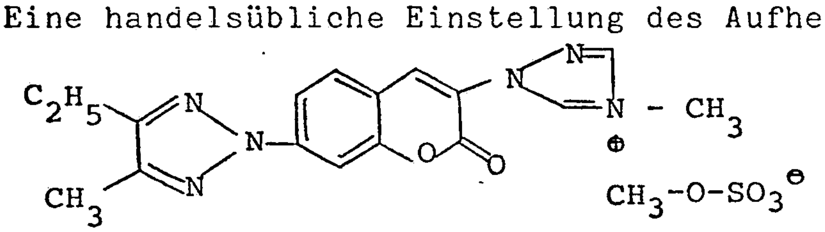

wird so verdünnt, daß die Lösung 1 g/l Wirksubstanz enthält. Zusätzlich werden 10 g/l des in Beispiel 1 beschriebenen Hilfsmittels hinzugegeben und mit der so hergestellten Flotte wird ein Polyacrylnitrilgewebe wie bei Beispiel 1 beschrieben, imprägniert und 30 sek. bei 160°C thermosoliert. Gegenüber einer Vergleichsprobe ohne Verwendung des Hilfsmittels wird eine Zunahme von 13 Weißgradeinheiten nach Berger und 12 Weißgradeinheiten nach Stensby erzielt.

Beispiel 9

Wie bei Beispiel 7 wird eine handelsübliche Einstellung des Aufhellers XIII

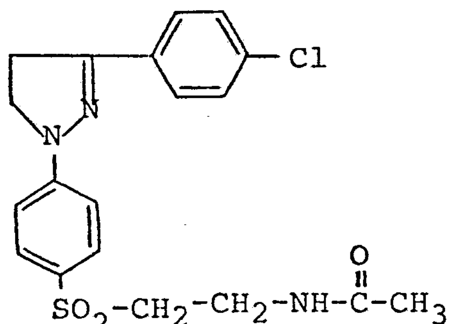

XIII

so verdünnt, daß die Dispersion 1 g/l Wirksubstanz enthält. Zusätzlich werden 10 g/l der in Beispiel 1 beschriebenen Substanz der Flotte hinzugegeben. Ein Gewebe aus Zellulose-2 1/2-acetat wird wie bei Beispiel 1 imprägniert und bei 190°C 30 sek. thermosoliert. Gegenüber einer Vergleichsprobe ohne Zusatz des Hilfsmittels wird eine Zunahme der Berger- und Stensby-Weißgrade um jeweils 4 Einheiten beobachtet.

Beispiel 10

Verwendet man anstelle des Aufhellers XIII in Beispiel 9 die handelsübliche Dispersion des Aufhellers XIV

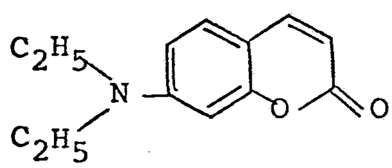

XIV

und versetzt man diese Dispersion mit 3 g/l des in Beispiel 1 beschriebenen Hilfsmittels, so erhält man im Vergleich zur Aufhellung ohne dieses Hilfsmittel eine Weißgradzunahme von 7 Berger- und 6 Stensby-Einheiten.

Beispiel 11

Wie bei Beispiel 1 beschrieben werden der Dispersion des Aufhellers I 3 g/l Trimethylphosphinoxid hinzugegeben. Die

Weißgradverbesserung auf PES gegenüber einer Flotte ohne dieses Hilfsmittel beträgt 3 Berger- und 2 Stensbyeinheiten.

Beispiel 12

Es wird analog zu Beispiel 10 auf PES gearbeitet. Als Hilfsmittel werden 10 g/l der Verbindung der Formel

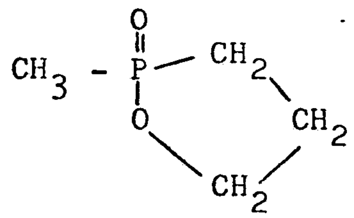

der Flotte des Aufhellers I hinzugegeben. Die erfolgte Weißgradverbesserung beträgt 4 Bergereinheiten und 3 Stensbyeinheiten.

Beispiel 13

Es wird wie bei Beispiel 1 mit Aufheller I auf PES gearbeitet. Als Hilfsmittel gibt man 3 g/l der Substanz

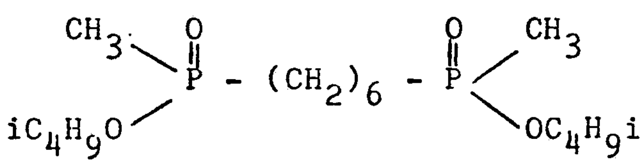

hinzu

Die Weißgradverbesserung beträgt 2 Bergereinheiten und 1 Stensbyeinheit.

Beispiel 14

Es wird wie in Beispiel 1 mit Aufheller I auf PES gearbeitet. Als Hilfsmittel werden 10 g/l der Substanz

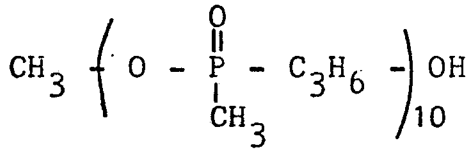

einsetzt.

Man erhält, verglichen gegenüber der Aufhellerflotte ohne Hilfsmittel, eine Weißgradzunahme von 4 Berger- und 3 Stensbyeinheiten.

Verwendet man an Stelle des oben formulierten Hilfsmittels das Carbamat

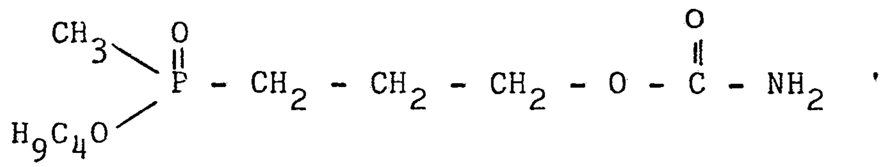

so beträgt die Weißgradsteigerung gegenüber der Vergleichsflotte 3 Berger- und 2 Stensbyeinheiten.

Beispiel 15

Wie in Beispiel 1 wird auf PES-Gewebe der Aufheller III (1 g/l Wirksubstanz in handelsüblicher Dispersion) appliziert und zwar in Gegenwart von jeweils 10 g/l der unten angegebenen Phosphinsäurederivate. Die daneben aufgeführten Zahlen geben die Zunahme der Berger- und Stensby-Weißgradeinheiten an im Vergleich zur normalen Aufhellerflotte ohne Zusatz des Hilfsmittels.

| | | B | S |
|---|---|---|---|
| a) | 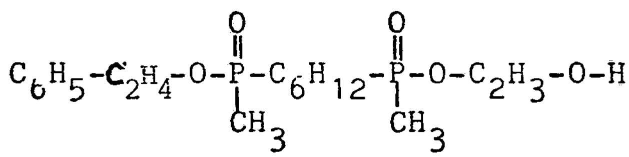 | 2 | 3 |
| b) | 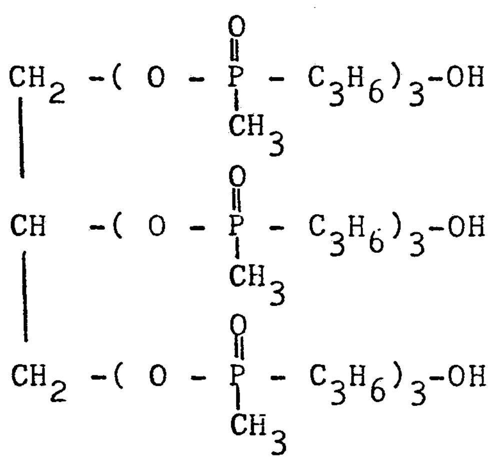 | 4 | 4 |
| c) | 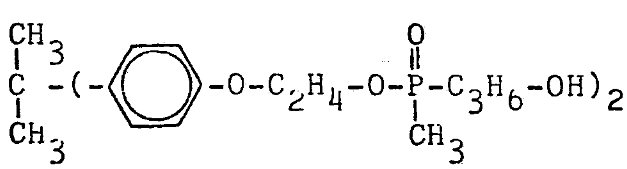 | 3 | 2 |
| d) | 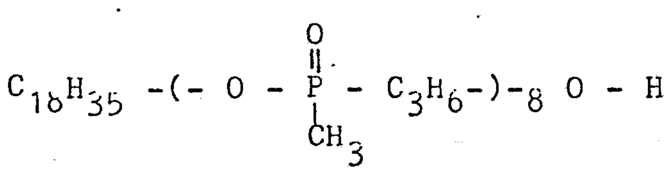 | 3 | 2 |

Beispiel 16

Es wird analog Beispiel 1 mit Aufheller I ( 1 g/l WS) auf PES gearbeitet. Der handelsüblichen Aufhellerflotte werden jedoch 39 g/l des Hilfsmittels der Formel

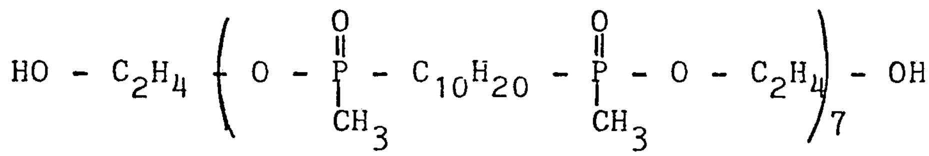

zugegeben und die Thermosoliertemperatur beträgt 160°C auf die Dauer von 40 sek. Im Vergleich zu einer Probe ohne Zusatz erhält man eine Weißgradsteigerung von 2 Berger- und 2 Stensbyeinheiten.

Beispiel 17

Die Aufhellung von Polyester-Gewebe nach dem in Beispiel 1 beschriebenen Verfahren mit 1 g/l Wirksubstanz des Aufhellers III und unter Zusatz von jeweils 10 g/l der im folgenden angegebenen Hilfsmittel ergab die jeweils angegebene Verbesserung im Weißgrad im Vergleich zu der Arbeitsweise mit der gleichen Menge Aufheller, jedoch ohne Hilfsmittel:

| | | WB | WS |
|---|---|---|---|
| a) | 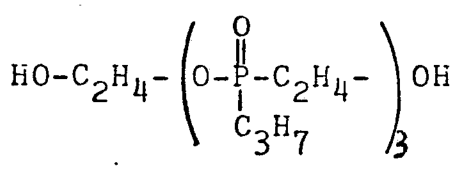 | 4.0 | 4.0 |
| b) | 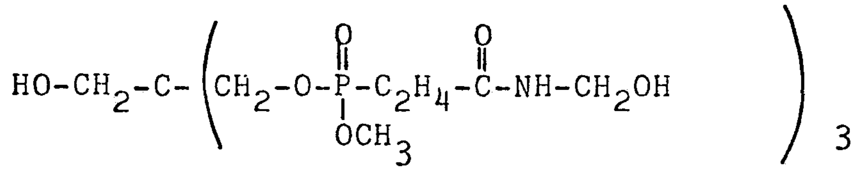 | 4 | 3 |
| c) | 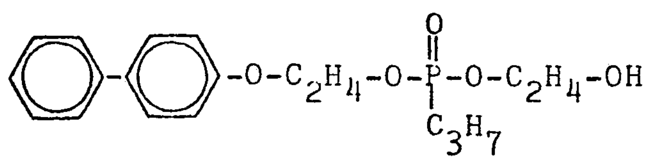 + 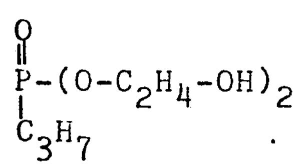 | 5 | 4 |

d) 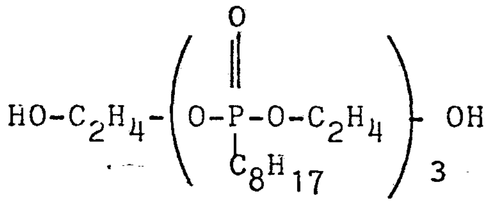 4 4

e) 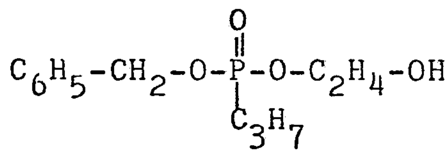

+ 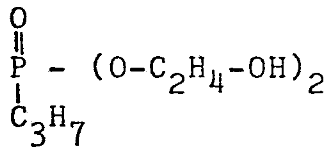 5 4

f) 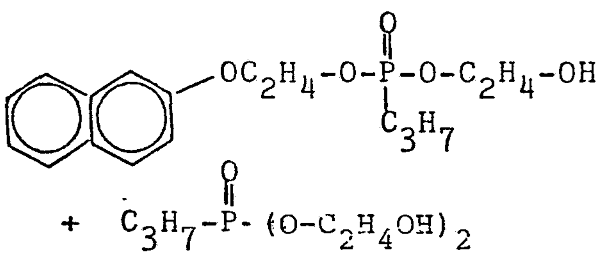 4 4

Beispiel 18

Analog zu Beispiel 1 wird ein Polyester-Gewebe mit 1 g/l des Aufhellers I in handelsüblicher Einstellung unter Zusatz von 10 g/l der Verbindung

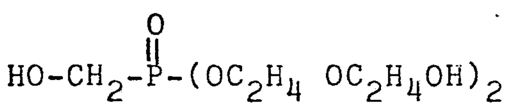

aufgehellt. Das so aufgehellte Gewebe zeigt eine Steigerung des Weißgrades von 3 Berger- und 2 Stensby-Einheiten im Vergleich zur Aufhellung ohne das genannte Hilfsmittel.

Beispiel 19

Es wird wie bei Beispiel 1 gearbeitet. Der Aufheller I in seiner handelsblichen Dispersion wird mit 1 g/l.Wirksubstanz eingesetzt und in Gegenwart von jeweils 10 g/l der unten angegebenen Phosphorsäurederivate geklotzt. Es werden folgende Weißgradunterschiede in Berger und Stensby-Einheiten im Vergleich zu einer Aufhellung ohne diese Hilfsmittel gemessen:

| | | WB | WS |
|---|---|---|---|
| a) | 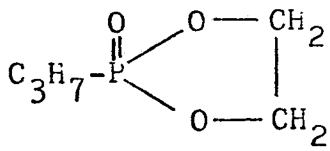 | 5 | 3 |
| b) | 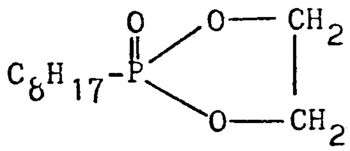 | 3 | 3 |
| c) | 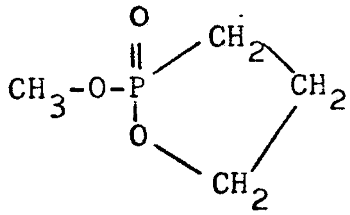 | 3 | 2 |
| d) | 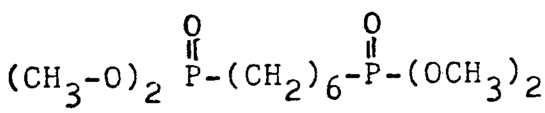 | 3 | 1 |
| e) | 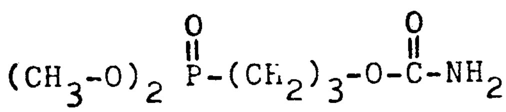 | 4 | 2 |
| f) | 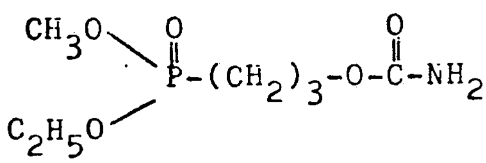 | 3 | 2 |
| g) | 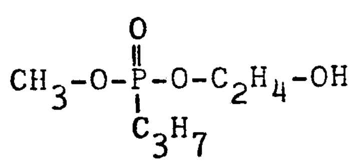 | 4 | 3 |
| h) | 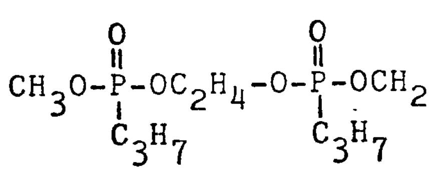 | 4 | 3 |

Beispiel 20

Es wird wie bei Beispiel 1 mit Aufheller I auf PES gearbeitet. (WS = 1 g/l). Als Hilfsmittel gibt man jeweils zu

a) 10 g/l eines Phosphorsäure-Derivates das wie folgt erhalten wird: 142 g (1 Mol) granuliertes Phosphorsäurepentoxid werden unter Kühlung bei 10-25°C in 320 g (10 Mol) Methanol eingetragen. Nach dem Abdestillieren des überschüssigen Methanols bei 80°C bei ca. 60-120 mbar werden 0,2 g Soda zugegeben und bei ca. 100°C 320,5 g (7,28 Mol) Äthylendioxid eingeleitet. Dabei sinkt die Säure-Zahl auf 2,4 ab.

b) 1 g/l eines Phosphorsäure-Derivats, das wie folgt hergestellt wird: In 154 g (1,1 Mol) Trimethylphosphat werden bei 60°C 142 g (1 Mol) Phosphorpentoxid eingetragen. Dann wird 3 Std. bei 120°C nachgerührt. Dabei resultiert eine klare Lösung. Dann werden bei 50°C beginnend (am Ende bei 110°C) 141 g (3,2 Mol) Äthylenoxid innerhalb von ca. 8 Std. anfangs unter leichter Kühlung eingeleitet. Die Säurezahl liegt am Schluß bei 3,0.

c) 3 g/l Phosphorsäuretrimethylester 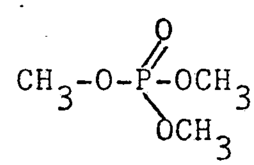

Vergleicht man die erzielten Weißgrade gegenüber Polyesterproben, welche nur mit dem handelsüblichen Aufheller I ausgerüstet wurden, so erhält man folgende Weißgradsteigerungen:

| | Wg. Berger | Weißgrad Stensby |
|---|---|---|
| a) | 3 | 2 |
| b) | 3 | 2 |
| c) | 2 | 1 |

Beispiel 21

Es wird wie bei Beispiel 1 gearbeitet mit 1 g/l WS an Aufheller I auf PES. Als Thermosolierhilfsmittel verwendet man 10 g/l des Umsetzungsproduktes aus $H_3PO_3$ und 5,1 Mol Ethylenoxid. Verglichen mit zusatzfreier Aufhellerflotte erhält man eine Weißgradsteigerung von 3 Berger- und 2 Stensbyeinheiten.

Beispiel 22

a) Es wird eine handelsübliche Einstellung des Aufhellers XV

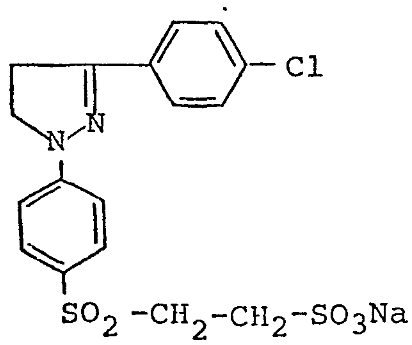

XV

so verdünnt, daß die klare Dispersion 2 g/l Weißsubstanz enthält. Eine weitere Probe wird mit 2 g/l an Produktes b aus Beispiel 20 versehen. Beide Flotten werden auf pH 3,6 mit Essigsäure eingestellt. Ein Gewebe aus Polyamid wird wie in Beispiel 1 imprägniert und bei 185° 30 Sekunden thermosoliert.

| | Weißgrad Berger | Weißgrad Stensby |
|---|---|---|
| Testprobe: | 150 | 149 |
| Vergleich: | 142 | 144 |

Eine ähnliche Verbesserung des Weißgrades ergibt sich mit dem Aufheller XIII.

Beispiel 23

Zu einer wäßrigen Dispersion einer Mischung aus Dispersions- und Küpenfarbstoffen werden 10 g/l eines handelsüblichen Antimigriermittels und 5 g/l bzw. 15 g/l des Thermosolierhilfsmittels a) aus Beispiel 19 zugegeben.

Bei einer Vergleichsfärbung werden zu der angegebenen wäßrigen Dispersion aus Dispersions- und Küpenfarbstoffen nur 10 g/l eines handelsüblichen Antimigriermittels zugegeben. Diese Lösungen werden mit Essigsäure auf pH 5,5 eingestellt und damit folgendermaßen verfahren:

Ausführung

Polyester-/Zellwolle-Gewebe (enthaltend 70 % Polyester- und 30 % Zellwoll-Fasern; gewaschen und vorfixiert) werden auf einem Foulard geklotzt (Flottenaufnahme 60 %), bei 100°C getrocknet und bei 190°C bzw. 210°C 1 Minute lang fixiert. Anschließend wird das Gewebe auf einem Foulard geklotzt (Flottenaufnahme 60 %) mit einer wäßrigen Lösung von

120 ml/l Natronlauge 38° Bé
60 g/l Natriumdithionit,

anschließend gedämpft (45 s bei ca. 104°C), danach mit 1 ml/l $H_2O_2$ (30 %ig) bei 40°C oxidiert, bei Kochtemperatur mit einem handelsüblichen Waschmittel geseift und getrocknet.

Die Farbstärkebestimmungen auf den so gefärbten Geweben erfolgen durch Remissionsmessungen mit einem handelsüblichen Spektrometer. Die Färbungen, die ohne Zusatz des Thermosolierhilfsmittels durchgeführt wurden, werden als Vergleich definiert und gleich 100 % gesetzt.

Die in der nachfolgenden Tabelle angegebenen Meßwerte wurden von dem gefärbten PES/Zw-Gewebe ("PES/Zw") und von dem gleichen Gewebe, nachdem der Zellwollanteil mit Schwefelsäure herausgelöst worden war, gemessen ("PES").

| Färbung | Remissionswerte (%) Fixiertemperatur 190oC | | 210oC | |
|---|---|---|---|---|
| | PES/Zw | PES | PES/Zw | PES |
| A) (Vergleichsfärbung):<br>2 g/l Disperse Red 183<br>8 g/l Vat Brown 45<br>10 g/l Antimigriermittel | 100 | 100 | 100 | 100 |

| Färbung | Remissionswerte (%) Fixiertemperatur 190oC | | 210oC | |
|---|---|---|---|---|
| | PES/Zw | PES | PES/Zw | PES |
| B) 2 g/l Disperse Red 183<br>8 g/l Vat Brown 45<br>10 g/l Antimigriermittel<br>5 g/l Thermosolierhilfsmittel | 120 | 106 | 112 | 112 |
| C) 2 g/l Disperse Red 183<br>8 g/l Vat Brown 45<br>10 g/l Antimigriermittel<br>15 g/l Thermosolierhilfsmittel | 120 | 117 | 130 | 117 |
| D) (Vergleichsfärbung):<br>4 g/l Disperse Red 184<br>4 g/l Vat Red 13<br>10 g/l Antimigriermittel | 100 | 100 | 100 | 100 |
| E) 4 g/l Disperse Red 184<br>4 g/l Vat Red 13<br>10 g/l Antimigriermittel<br>5 g/l Thermosolierhilfsmittel | 111 | 108 | 116 | 107 |
| F) 4 g/l Disperse Red 184<br>4 g/l Vat Red 13<br>10 g/l Antimigriermittel<br>15 g/l Thermosolierhilfsmittel | 120 | 120 | 112 | 116 |

Bei den Färbungen B), C), E) und F) sind sowohl auf dem Mischgewebe als auch auf dem PES-Anteil des Mischgewebes deutliche Farbvertiefungen gegenüber den Vergleichsfärbungen A) und D) festzustellen.

Beispiel 24

Es wird wie im Beispiel 23 verfahren, anstelle der Mischung aus Dispersions- und Küpenfarbstoff wird nur ein Dispersionsfarbstoff verwendet.

Ausführung

Polyester/Zellwoll-Gewebe (wie bei Bsp. 23) und Polyester-Stapelfasergewebe werden auf einem Foulard geklotzt (Flottenaufnahme 60 % bzw. 50 %), bei 100°C getrocknet und beide Gewebe bei 190°C bzw. 210°C 1 Minute lang fixiert. Anschließend wird bei 75°C 20 Minuten lang mit

5 ml/l Natronlauge 38° Bé und
4 g/l Natriumdithionit

nachgereinigt und getrocknet.

Die Farbstärkebestimmungen erfolgen wie bei Beispiel 23 auf dem Polyesteranteil des Polyester/Zellwollgewebes (nach Auslösen des Zellwollanteils) sowie auf dem Polyester-Stapelfasergewebe.

| Färbung | Remissionswerte (%) Fixiertemperatur 190oC | | 210oC | |
|---|---|---|---|---|
| | PES | PES-Stap. | PES | PES-Stap. |
| A) (Vergleichsfärbung):<br>5 g/l Disperse Orange 42<br>10 g/l Antimigriermittel | 100 | 100 | 100 | 100 |
| B) 5 g/l Disperse Orange 42<br>10 g/l Antimigriermittel<br>5 g/l Thermosolierhilfsm. | 100 | 111 | 105 | 111 |
| C) 5 g/l Disperse Orange 42<br>10 g/l Antimigriermittel<br>15 g/l Thermosolierhilfsm. | 108 | 118 | 111 | 108 |

0019749

| Färbung | Remissionswerte (%) Fixiertemperatur 190oC | | 210oC | |
|---|---|---|---|---|
| | PES | PES-Stap. | PES | PES-Stap. |
| D) (Vergleichsfärbung): 5 g/l Disperse Red 184, 10 g/l Antimigriermittel | 100 | 100 | 100 | 100 |
| E) 5 g/l Disperse Red 184, 10 g/l Antimigriermittel, 5 g/l Thermosolierhilfsm. | 105 | 113 | 101 | 104 |
| F) 5 g/l Disperse Red 184, 10 g/l Antimigriermittel, 15 g/l Thermosolierhilfsm. | 105 | 120 | 102 | 110 |

Bei den Färbungen B), C), E), F) sind vor allem auf dem Polyester-Stapelfasergewebe deutliche Farbvertiefungen gegenüber den Färbungen A) und D) festzustellen.

Beispiel 25

Es wird wie im Beispiel 24 verfahren, wobei eine Mischung aus Dispersionsfarbstoffen verwendet wird.

Ausführung

Polyester/Zellwoll-Gewebe (wie bei Beispiel 23) wird auf einem Foulard geklotzt (Flottenaufnahme 60 %), bei 100°C getrocknet und 1 Minute lang bei 210°C fixiert.

Anschließend wird bei 75°C 20 Minuten lang mit

5 ml/l Natronlauge 38° Bé und
4 g/l Natriumdithionit

nachgereinigt und getrocknet.

Die Farbstärkebestimmungen erfolgen wie in Beispiel 23 angegeben auf dem Polyester-Anteil des Polyester/Zellwollgewebes.

| Färbungen | Remissionswerte (%) |
|---|---|
| A) (Vergleichsfärbung):<br>12 g/l Disperse Blue 139<br>9 g/l Disperse Brown 1<br>1 g/l Disperse Yellow 68<br>10 g/l Antimigriermittel | 100 |
| B) 12 g/l Disperse Blue 139<br>9 g/l Disperse Brown 1<br>1 g/l Disperse Yellow 68<br>10 g/l Antimigriermittel<br>5 g/l Thermosolierhilfsm. | 115 |
| C) 12 g/l Disperse Blue 139<br>9 g/l Disperse Brown 1<br>1 g/l Disperse Yellow 68<br>10 g/l Antimigriermittel<br>15 g/l Thermosolierhilfsm. | 117 |

Die Färbungen B) und C) zeigen gegenüber der Vergleichsfärbung A) eine deutliche Farbvertiefung.

Bei diesen Färbungen ist die grauschleierverhindernde Wirkung des Thermosolierhilfsmittels besonders gut zu erkennen. Während bei der Vergleichsfärbung A) ein deutlicher Grauschleier zu beobachten ist, tritt diese ERscheinung bei den Färbungen B) und C) nicht auf.

Patentanspruch:

1. Verfahren zum optischen Aufhellen und Färben von Textilmaterial aus Synthesefasern nach dem Thermosolverfahren, das dadurch gekennzeichnet ist, daß man das Thermosolverfahren in Gegenwart eines Thermosolierhilfsmittels der allgemeinen Formel I

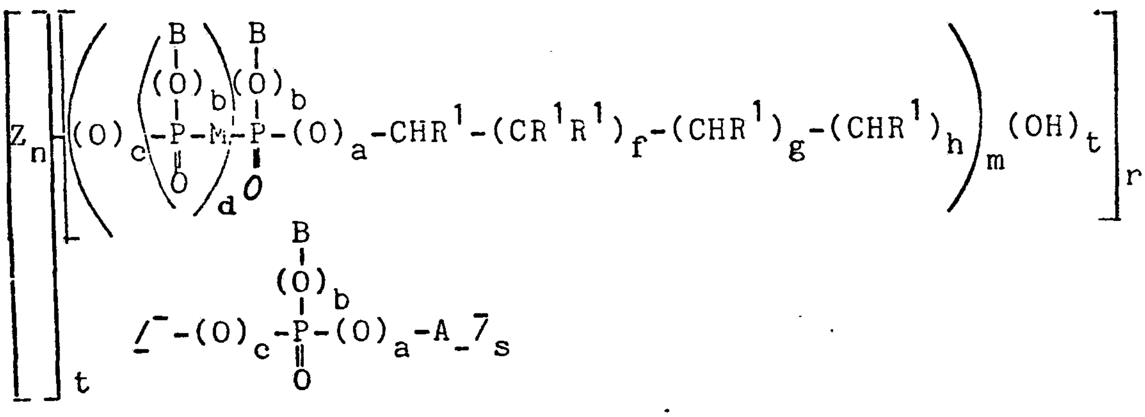

(I)

durchgeführt, wobei

r und s 0 bis 8, wobei gilt, daß nur entweder r oder s > 0 sein können, f, g, h 0 oder 1, f + g + h = 0 nur dann, wenn auch a = 0 ist,

m 1 bis 100, bevorzugt 1 - 10,

a, b, c 0 oder 1, bevorzugt a + b + c = 1 oder 2,

d 0 oder 1, bevorzugt 0,

t 0 oder 1, bevorzugt 1, 0 nur dann, wenn gleichzeitig r = 1, s = 0 und m = 1 sind,

$R^1$ gleiche oder verschiedene, verzweigte oder unverzweigte Alkyl- oder Alkenylgruppen mit 1 bis 4 Kohlenstoffatomen und bevorzugt Wasserstoff,

B gegebenenfalls durch eine oder mehrere bisfunktionelle Gruppen (Q) unterbrochene und durch monofunktionelle Reste L substituierte und/oder durch Fluor-, Chlor- oder Bromatome ein- oder mehrmals substituierte, gegebenenfalls verzweigte, spiroverzweigte, cyclische und gegebenenfalls ungesättigte aliphatische

oder aromatische Kohlenwasserstoffreste mit 1 bis zu 22 Kohlenstoffatomen, bevorzugt $C_1$-$C_8$-Alkyl oder Hydroxyäthyl und für b = 1 Hydroxymethyl, $C_1$-$C_4$-Alkylen,

A dasselbe wie B,

M $C_1$-$C_{10}$-Alkylen oder Phenylen oder Xylylen, bevorzugt $C_1$-$C_4$-Alkylen

L einwertige funktionelle Gruppen von der Art

OH, $OR^2$, $\overset{O}{\overset{\|}{C}}R^2$, $O\overset{O}{\overset{\|}{C}}R^2$, $\overset{O}{\overset{\|}{C}}OR^2$, $NR^1R^1$, $NR^1$-CO-$R^2$, CO-$NR^1R^1$, $OCONR^1R^1$, $NR^1$-CO-$NR^1R^1$, wobei $R^2$ dasselbe wie $R^1$ außer Wasserstoff sein kann,

Q eine bisfunktionelle, die Kohlenwasserstoffketten unterbrechende Gruppe von der Art -O-, -S-, -$SO_2$-, -$NR^1$-, -CO-O-, -O-CO-, -O-CO-$NR^1$-, -$NR^1$-CO-, -$NR^1$-CO-O-, -$NR^1$-CO-$NR^1$- und

$Z_n$ Wasserstoff oder einen n-wertigen Rest, wobei n 1 bis 8 sein kann, aus der Gruppe geradkettige oder verzweigte Kohlenwasserstoffreste mit 1 bis 10, vorzugsweise 1 bis 12 C-Atomen, die gegebenenfalls durch bis zu acht -O-, allgemein bis zu (q/2-1) -O-, wenn q die Anzahl der C-Atome in $Z_n$ bedeutet, bzw. bis zu drei -S-, und/oder $NR^1$-Reste mit $R^1$ = ($C_1$-$C_4$)-Alkyl, insbesondere Methyl, unterbrochen und/oder durch die Reste L und/oder Fluor-, Chlor-, Bromatome, ein oder mehrmals substituiert sein können; Cyclohexylreste, die gegebenenfalls durch ein bis drei, vorzugsweise einen geradkettigen oder verzweigten und/oder ungesättigten und/oder F-, Cl-, Br-Atome, vorzugsweise bis zu 4, tragenden Alkylrest mit 1 bis 4 C-Atomen substituiert sein können; aromatische oder araliphatische Reste, die sich von Benzol, Alkylbenzolen mit bis zu 22 C-Atomen, von Naphthalin, Diphenyl, Diphenylmethan, Diphenyläthan oder 2,2-Diphenylpropan ableiten, die gegebenenfalls im Kern durch 1 oder 2 Methoxy- bzw. Äthoxygruppen substituiert sein können, und die im Kern und/oder den Seitenketten durch F-, Cl-, Br-Atome substituiert, vorzugsweise bis fünfmal substituiert sein können, oder phosphorhaltige Reste der allgemeinen Formel

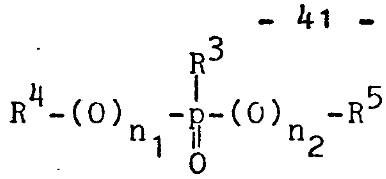

$Z_{n,1}$

in der $n_1$, $n_2$ unabhängig voneinander 0 oder 1 und $R_3$ Alkyl-, Hydroxyalkyl-, gegebenenfalls $(C_1-C_4)$-alkyliertes bzw. -dialkyliertes Aminoalkyl-, Halogen- (vorzugsweise Cl-)alkyl mit 1 bis 3 C-Atomen, Alkenyl mit 2 oder 3 C-Atomen oder Phenyl, das gegebenenfalls durch 1 oder 2 Halogenatome, vorzugsweise Cl, Br, substituiert sein kann, bedeuten,

$R^4$, $R^5$ wenn das zugehörige $n_1$ bzw. $n_2$ = 0 ist, die gleichen Bedeutungen wie $R^3$ haben mit der Einschränkung, daß für $n_1 = n_2 = 0$ mindestens einer der Reste $R^4$, $R^5$ ein $(C_1-C_3)$ Alkylen-Rest ist; wenn das zugehörige $n_1$ und/oder $n_2$ = 1 ist, einen geradkettigen oder verzweigten Alkylenrest mit 2- 5 C-Atomen oder den Rest

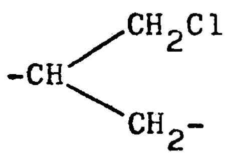

bedeuten,

oder $Z_n$ phosphorhaltige Reste der allgemeinen Formel

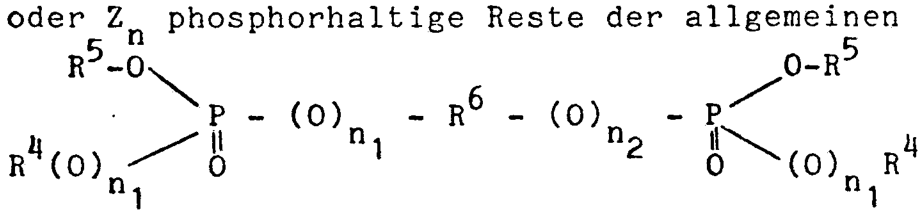

$Z_{n,2}$

in der $n_1$, $n_2$, $R^4$, $R^5$ Bedeutungen wie in $Z_{n,1}$ haben und $R^6$ einen geradkettigen oder verzweigten $(C_1-C_6)$-Alkylen-, Phenylen-, Äthylen-Rest oder einen Rest

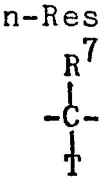

mit T = OH, $NH_2$ und $R^7$ = $(C_1-C_4)$-Alkyl oder

$Z_n$ bedeutet ein Alkalimetall, bevorzugt Natrium und Kalium oder $NR^4$ bedeuten, aber nur wenn c = 1 ist.

Europäisches Patentamt

# EUROPÄISCHER RECHERCHENBERICHT

0019749

Nummer der Anmeldung

EP 80 10 2444

| Kategorie | EINSCHLÄGIGE DOKUMENTE<br>Kennzeichnung des Dokuments mit Angabe, soweit erforderlich, der maßgeblichen Teile | betrifft Anspruch | KLASSIFIKATION DER ANMELDUNG (Int.Cl. 3) |
|---|---|---|---|
| X | FR - A - 1 533 669 (BAYER)<br>* Zusammenfassung I; Seite 1, rechte Spalte, Absatz 2; Seite 1, linke Spalte, Absatz 4; Beispiel 4 *<br>--<br>DE - A - 1 805 157 (BAYER)<br>* Patentanspruch *<br>---- | 1<br><br><br><br>1 | D 06 L 3/12<br>D 06 P 1/667 |

RECHERCHIERTE SACHGEBIETE (Int. Cl. 3)

D 06 L 3/12
D 06 P 1/667
C 09 B 67/42
C 09 B 67/46

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 03-09-1980 | GINESTET |